# EUROPÄISCHE PATENTSCHRIFT

(11) **EP 2 794 376 B1**
(45) Veröffentlichungstag und Bekanntmachung des Hinweises auf die Patenterteilung: **02.10.2019**
(21) Anmeldenummer: 12778713.3
(22) Anmeldetag: 24.10.2012
(51) Int. Cl.: B60W 20/00, B60K 6/48, F16D 48/06

(54) **ADAPTION DES KUPPLUNGSMOMENTES EINER TRENNKUPPLUNG EINES PARALLELHYBRID-ANTRIEBSSTRANGS EINES FAHRZEUGS**
ADAPTATION OF THE CLUTCH TORQUE OF A CLUTCH OF A PARALLEL-HYBRID DRIVE TRAIN OF A VEHICLE
ADAPTATION DU COUPLE D'EMBRAYAGE D'UN EMBRAYAGE SÉPARATEUR D'UNE CHAÎNE CINÉMATIQUE HYBRIDE PARALLÈLE D'UN VÉHICULE

(30) Priorität: 22.12.2011 DE 102011089676
(43) Veröffentlichungstag der Anmeldung: 29.10.2014
(73) Patentinhaber: Robert Bosch GmbH, 70442 Stuttgart (DE)
(72) Erfinder: SCHNITZER, Manuel, 72657 Altenriet (DE); IACONA, Fabio, 71732 Tamm (DE); SCHMOLL GENANNT EISENWERTH, Kaspar, 71665 Vaihingen-Horrheim (DE); KLYMENKO, Mykhaylo, 70839 Gerlingen (DE)
(86) Internationale Anmeldenummer: PCT/EP2012/071003
(87) Internationale Veröffentlichungsnummer: WO 2013/091947

(56) Entgegenhaltungen:
- WO-A1-2008/064633
- WO-A1-2011/134451
- DE-A1- 10 260 435

## Beschreibung

### Stand der Technik

Siehe WO2008/064633 und WO2011/134451.

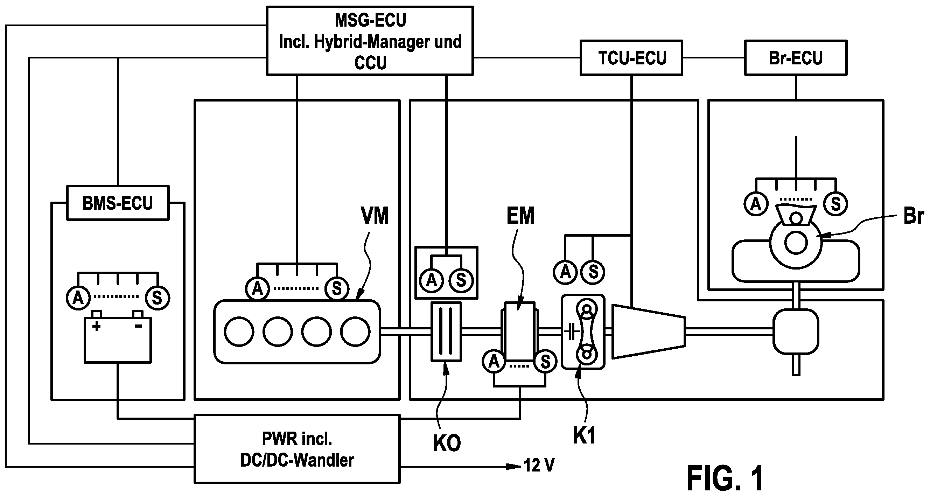

In Parallelhybridsystemen (z.B. VW Touareg Hybrid, Porsche Cayenne S Hybrid, Nissan Fuga Hybrid) befinden sich der Verbrennungsmotor (VM) und die elektrische Maschine (EM) auf einer Antriebswelle (siehe Figur 1). Um rein elektrisch fahren zu können, wird der Verbrennungsmotor üblicherweise durch eine proportionale Trennkupplung (K0) vom restlichen Antrieb getrennt. Dadurch kann nur mit Hilfe der elektrischen Maschine Vortrieb erzeugt werden, die Schleppmomente des Verbrennungsmotors und Massendurchsatz in der Abgasnachbehandlungsanlage werden vermieden.

Die Trennkupplung kann bauartbedingt in eine Impulskupplung und eine Proportionalkupplung unterschieden werden. Impulskupplungen kennen nur die Zustände offen (kein Moment) und geschlossen (volles Moment). Proportionalkupplungen hingegen sind in dazu in der Lage, ein beliebiges Moment der Kupplungskennline zwischen den Zuständen offen und geschlossen einzustellen. Sie kommen insbesondere in "schlupfsensiblen" Triebsträngen zur Anwendung. Triebstränge mit Wandler sind beispielsweise "schlupfsensibel", da die Änderung der Drehzahldifferenz zwischen elektrischer Maschine und Getriebeeingang (Wandlerschlupf) eine Auswirkung auf das Moment am Rad zur Folge hat.

Um den Verbrennungsmotor bei Bedarf während der elektrischen Fahrt ohne Verwendung einer zusätzlichen Starteinheit (z.B. Ritzelstarter) wieder zuschalten zu können, wird er mit Hilfe der Trennkupplung gestartet. Um den geltenden Komfortansprüchen in einem "schlupfsensiblem" Triebstrang gerecht zu werden, ist es notwendig, das über die Kupplung gestellte Drehmoment möglichst genau zu kennen, da es mittels der elektrischen Maschine kompensiert wird, damit sich die Drehzahl der elektrischen Maschine und damit der Schlupf im Startfall möglichst nicht ändert.

Es ist Stand der Technik in einigen Startphasen, unter Erfüllung bestimmter Randbedingungen, die unter der Offenlegungsschrift DE 10 2008 042 685 A1 bereits beschriebene Drehimpulsbilanzierung der beteiligten Triebstrangkomponenten zur Adaption des Kupplungsmoments durchzuführen. Stark vereinfacht wird bei dieser Bilanzierung die erwartete mit der tatsächlichen Drehzahländerung an der elektrischen Maschine im Startfall verglichen. Liegt eine Abweichung vor, wird das tatsächlich übertragene Kupplungsmoment der Trennkupplung als Ursache für diese Abweichung angesehen und entsprechend dieser Abweichung korrigiert (adaptiert).

Die Adaptionshäufigkeit pro Start liegt in aktuellen Hybrid-Serienprojekten (PL72h) bei ca. 30% der Starts. Es erfolgen im Durchschnitt ca. 4 Starts pro Kilometer. Je genauer die Kenntnis über die Kupplungskennlinie (Kupplungsmoment über Aktorweg), desto komfortabler können die Wiederstarts erfolgen. Daher ist es notwendig, die Adaptionen möglichst uneingeschränkt und falls erforderlich durchführen zu können.

### Offenbarung der Erfindung

Durch den Trend zu Plugln Hybridfahrzeugen, also Fahrzeugen mit vergrößerter Batteriekapazität und der Möglichkeit, diese Batterien per Netzkabel aufzuladen, kann sich die Anzahl der Motorstarts drastisch verringern (< 1 Start/km) und damit auch die Möglichkeit der Adaption der Kupplungskennlinie über das bekannte Verfahren. Es ist sogar möglich, dass wochenlang gar nicht adaptiert werden kann, falls der Fahrer den zulässigen elektrischen Fahrbereich optimal ausnutzt und die Fahrzeugbatterie ausschließlich an der Steckdose lädt. Trotzdem muss sichergestellt werden, dass der Motorstart auch nach langen Phasen rein elektrischen Fahrens den Komfortansprüchen gerecht wird.

Durch das erfindungsgemäße Verfahren ist es möglich, die bewährte Drehimpulsbilanzierung anzuwenden, ohne dass der Verbrennungsmotor gestartet wird, sodass dies von den Insassen nicht bemerkt wird.

In der Vergangenheit musste für eine erfolgreiche Adaption darauf gewartet werden, dass die übergeordnete Steuerung (Betriebsstrategie) auf Grund der vorliegenden Fahrsituation einen Start auslöst und die Randbedingungen in diesem Startfall auch noch für eine Adaption passend sind. Durch das neue Plugln-Fahrprofil ergibt sich die Notwendigkeit, diese Adaption aktiv anzutriggern und zu koordinieren.

Der Vorteil der hier beschriebenen Erfindung liegt darin begründet, dass eine Möglichkeit bereitgestellt wird, die bewährte Drehimpulsbilanzierung derart auszuführen, dass zum einen kein klassischer Motorstart mit Einspritzung, Zündung und Drehzahlsynchronisation von Verbrennungsmotor und elektrischer Maschine stattfinden muss und zum zweiten, dass dieser Vorgang für den Fahrer unbemerkt von statten geht. Dieser Betriebszustand ist im Folgenden als "Phantomstart" bezeichnet, da der Verbrennungsmotor nicht tatsächlich gestartet wird (z.B. keine Einspritzung und/oder Zündung). Der reale Verbrennungsmotor-Start wird hier als "Wiederstart" bezeichnet.

Weitere Vorteile sind, dass zum einen von der Kupplungssteuerung der Fahrzustand beobachtet wird und dass bei adaptionsfreundlichen Randbedingungen ein Phantomstart von der Kupplungssteuerung ausgelöst werden kann, sobald der Adaptionswunsch in der Kupplungssteuerung vorhanden ist, was die Adaptionshäufigkeit pro Start deutlich verbessert. Zum anderen ist es beim heutigen Adaptionsverfahren so, dass der Adaptionszeitraum (Anzahl Stützstellen für Bilanzierungsberechnung) auf Grund der notwendigen Dynamikanforderungen beim Wiederstart durch die übergeordnete Steuerung sehr klein ist, d.h. der Fahrer äußert seinen Momentenwunsch über das Fahrpedal und möchte/muss primär eine unmittelbare Reaktion darauf erleben, adaptiert wird nur sekundär oder gar nicht. Je größer die Verzögerung, desto "unsportlicher wird das Produkt wahrgenommen. Dies ist beim hier beschriebenen Verfahren inklusive Phantomstart nicht mehr der Fall, da der Start nicht durch Fahrerwunsch ausgelöst wird, sondern durch die Kupplungssteuerungsfunktionalität.

Der Phantomstart wird aktiv durch die Kupplungssteuerungsfunktionalität wieder beendet, wenn eine hinreichende Anzahl von Berechnungsstützstellen für die Adaption vorhanden ist, der Adaptionswunsch durch einen strategiebedingten Motorstart abgelöst wird oder die für die Adaption gültigen Randbedingungen verletzt werden. Die bisherige Adaption während des Wiederstarts kann nach wie vor erfolgen, das Phantomstartverfahren bildet einen parallelen Funktionszweig dazu.

Im Allgemeinen weist ein Verfahren zur Adaption des Kupplungsmomentes einer Proportionalkupplung, die zwischen einem Verbrennungsmotor und einer elektrischen Maschine in einem Antriebsstrang eines Parallel-Hybridfahrzeugs angeordnet ist, gemäß eines ersten Aspektes der Erfindung die folgenden Schritte auf: Prüfen, ob die Proportionalkupplung offen ist, ob der Verbrennungsmotor aus ist und ob die elektrische Maschine aktiv ist, zumindest teilweise Schließen der Proportionalkupplung, Andrehen des Verbrennungsmotors, und Adaptieren des Kupplungsmomentes der Proportionalkupplung. Bei diesem Verfahren wird kein Brennstoff in den Verbrennungsmotor eingespritzt, womit der Verbrennungsmotor nicht gezündet wird.

Gemäß einer Ausführungsform der Erfindung weist das Adaptieren des Kupplungsmomentes der Proportionalkupplung ein Vergleichen einer erwarteten Drehzahländerung der elektrischen Maschine mit einer tatsächlich aufgetretenen Drehzahländerung auf.

Neben den Bedingungen, dass die Proportionalkupplung offen ist, der Verbrennungsmotor aus ist und die elektrische Maschine aktiv ist, kann gemäß einer Ausführungsform der Erfindung ferner zumindest eine der folgenden Bedingungen geprüft werden, nämlich ob der Getriebezustand in Ordnung ist, ob die Fahrzeuggeschwindigkeit innerhalb vorgegebener Grenzen liegt, ob genügend Momentenreserve der elektrischen Maschine vorhanden ist, ob ein Fahrerwunsch in bestimmten Grenzen vorliegt und ob dieser stabil ist, ob eine Zeitbedingung erfüllt ist (z.B. Entprellung, Zeit seit letzter Adaption), ob eine Temperaturbedingung erfüllt ist (z.B. des Getriebeöls), ob die Drehzahlen von Verbrennungsmotor und elektrischer Maschine innerhalb vorgegebener Werte liegen.

Gemäß einer weiteren Ausführungsform der Erfindung kann das Verfahren jederzeit abgebrochen werden. Da die Adaption des Kupplungsmomentes eine untergeordnete Priorität besitzt, kann somit zu jedem Zeitpunkt eine Veränderung der geprüften Bedingungen, insbesondere eine Veränderung des Fahrerwunsches, zu einem Abbruch des Verfahrens führen.

Ferner kann das erfindungsgemäße Verfahren aufweisen, dass optische und/oder akustische Signale ausgeblendet werden, die einem Fahrer während eines normalen Betriebszustands eine Überwachung der Zustände zum Beispiel der Motoren ermöglichen.

Gemäß eines weiteren Aspektes der Erfindung weist ein Parallelhybrid-Antriebsstrang einen Verbrennungsmotor, eine elektrischen Maschine, eine Proportionalkupplung, welche zwischen dem Verbrennungsmotor und der Elektrischen Maschine angeordnet ist, und eine Steuereinheit zur Steuerung des Antriebsstranges auf. Die Steuereinheit ist eingerichtet, das erfindungsgemäße Verfahren zur Adaption des Kupplungsmomentes der Proportionalkupplung durchzuführen.

Gemäß eines weiteren Aspekts der Erfindung wird ein Computerprogramm bereitgestellt, das alle Schritte eines erfindungsgemäßen Verfahrens ausführt, wenn es auf einer Steuerungseinheit eines Parallelhybrid-Antriebsstranges, wie oben beschrieben, abläuft. Ein entsprechendes Computerprogramm wird vorzugsweise in einen Arbeitsspeicher der Steuerungseinheit geladen. Die Steuerungseinheit oder ein Datenprozessor ist somit ausgestattet, das Verfahren gemäß der Erfindung auszuführen.

Ferner betrifft die Erfindung auch ein computerlesbares Medium wie eine CD-ROM, in welcher das Computerprogramm gespeichert sein kann. Jedoch kann das Computerprogramm ebenfalls über ein Netzwerk wie das Internet bereitgestellt werden und kann in den Arbeitsspeicher der Steuerungseinheit aus diesem Netzwerk heruntergeladen werden.

Es wird angemerkt, dass Ausführungsformen der Erfindung unter Bezugnahme auf unterschiedliche Gegenstände beschrieben werden. Insbesondere werden einige Ausführungsformen oder Aspekte in Bezug auf Vorrichtungsansprüche und andere Ausführungsformen oder Aspekte in Bezug auf Verfahrensansprüche beschrieben. Jedoch wird ein Fachmann von der obigen und der folgenden Beschreibung zusätzlich zu jeder Kombination von Merkmalen, die zu einer Art von Gegenstand gehören, ebenfalls jede Kombination zwischen Merkmalen erkennen, die zu unterschiedlichen Gegenständen beschrieben sind. Dies alles zählt zur Gesamtoffenbarung der Anmeldung.

Oben beschriebene Aspekte und weitere Aspekte, Merkmale und Vorteile der Erfindung können ebenfalls aus dem Beispiel einer Ausführungsform entnommen werden, die im Folgenden unter Bezugnahme auf die anhängenden Zeichnungen beschrieben wird. Es wird angemerkt, dass die Erfindung nicht auf diese Ausführungsform beschränkt ist.

### KURZE BESCHREIBUNG DER ZEICHNUNGEN

Fig. 1 ist eine schematische Darstellung eines Parallelhybrid-Antriebsstranges gemäß der Erfindung.
Fig. 2 ist ein Flussdiagramm zur schematischen Darstellung eines Verfahrens gemäß der Erfindung.
Fig.3 ist ein Ablaufdiagramm, welches die Momente und Drehzahlen der Elemente eines erfindungsgemäßen Parallelhybrid-Antriebsstranges über der Zeit verdeutlicht.

### DETAILLIERTE BESCHREIBUNG DER ZEICHNUNGEN

Fig. 1 zeigt eine schematische Darstellung eines Parallelhybrid-Antriebsstrangs eines Fahrzeugs. In Fig. 1 ist eine Trennkupplung K0 zwischen einem Verbrennungsmotor VM und einer Elektromaschine EM angeordnet, die sowohl als Elektromotor wie auch als Generator verwendet werden kann, wobei im Anschluss an die Elektromaschine der Antriebsstrang zu einer angetriebenen Achse eines Fahrzeugs fortgeführt ist.

Der Antriebsstrang kann ferner eine Reihe von Aktuatoren A und Sensoren S aufweisen, die verwendet werden können, um einerseits einen aktuellen Betriebszustand eines der Elemente des Antriebsstrangs zu erfassen, wie zum Beispiel des Verbrennungsmotors, der Trennkupplung, der Elektromaschine oder der Abtriebskupplung, und andererseits den Betriebszustand zu verändern. Die Aktuatoren und Sensoren sind zumindest mit einer Steuerungseinheit ECU verbunden. Die Steuerungseinheit des Antriebsstrangs in Figur 1 weist einerseits ein Motor-Steuerungsgerät MSG - ECU und andererseits ein Getriebe-Steuerungsgerät TCU - ECU auf. Ferner weist die Steuerungseinheit eine BremsSteuerung Br - ECU sowie eine Batterie-Steuerung BMS - ECU auf. Die einzelnen Steuerungseinheiten sind über ein Bus-System miteinander verbunden.

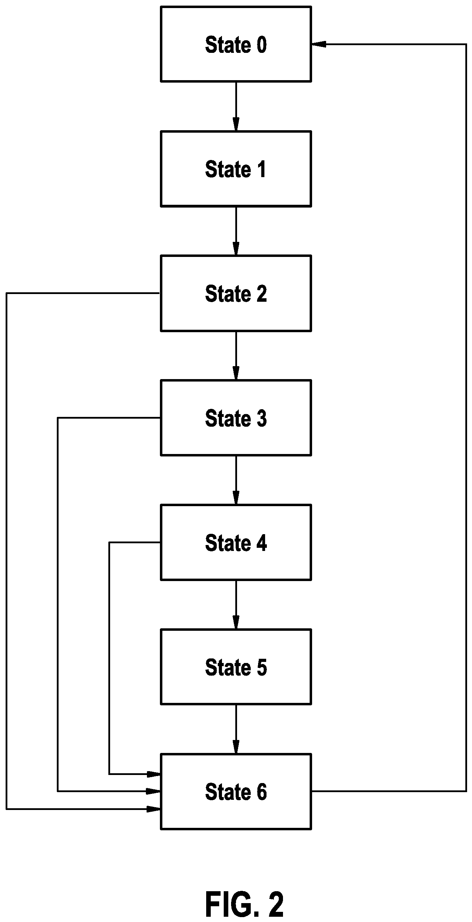

Fig. 2 ist ein Flussdiagramm, welches prinzipiell die Schritte eines Verfahrens gemäß der Erfindung zur Steuerung eines Parallelhybrid-Antriebsstranges aufzeigt. Es wird angemerkt, dass die beschriebenen Schritte Haupt-Schritte sind, wobei diese Haupt-Schritte in Unter-Schritte differenziert und unterteilt werden können. Außerdem können weitere Unter-Schritte zwischen den Haupt-Schritten vorgesehen sein. Daher ist ein Unter-Schritt lediglich genannt, wenn dieser Schritt wichtig für das Verständnis des Prinzips des Verfahrens gemäß der Erfindung ist.
- Im State 0 (Idle) wird in einem Anfangszustand, in dem ein Fahrzeug elektrisch fährt, d.h. der Verbrennungsmotor aus ist, die Trennkupplung offen ist und die Elektromaschine aktiv ist, vom System ein Adaptionswunsch registriert. Damit wird das erfindungsgemäße Verfahren ausgelöst.
- In State 1 (Enable conditions) werden alle gewünschten Randbedingungen überprüft. Beispielsweise können folgende Randbedingungen für einen Phantomstart ausgewertet werden:
   - Fahrzustand "elektrisch fahren"
   - Kupplungszustand i.0.
   - Getriebezustände i.0
   - Fahrzeuggeschwindigkeit innerhalb Grenzen
   - Genügend Momentenreserve EM vorhanden (um K0-Moment zu 100% kompensieren zu können)
   - Fahrerwunsch innerhalb Grenzen und stabil
   - Zeitbedingungen (Entprellung, Zeit seit letzter Adaption)
   - Temperaturbedingungen (z.B. Getriebeöl)
   - Drehzahlen (VM, EM)
- In State 2 (Preconditions valid) wird festgestellt, ob die gewünschten/notwendigen Bedingungen erfüllt sind.
- In State 3 (Fakestart active) wird ein Phantomstart ausgelöst.
- In State 4 (Clutch active) wird die Proportionalkupplung auf einen Wert mit einem zu erwartenden Übertragungsmoment gestellt.
- In State 5 (Wait for success) wird ein tatsächliches Übertragungsmoment erfasst und auf der Basis eines Vergleichs zwischen dem zu erwartenden Übertragungsmoment und dem tatsächlichen Übertragungsmoment ein Adaptionswert berechnet.
- In State 6 (Fakestart end) wird der Phantomstart beendet.

In Figur 2 wird durch die Pfeile, welche State 2 direkt mit State 6, State 3 direkt mit State 6 und State 4 direkt mit State 6 verbinden, dargestellt, dass während des Phantomstarts und der damit verbundenen Adaption des Kopplungsmomentes jederzeit ein Abbruch des Verfahrens vorgenommen werden kann.

Ferner verdeutlicht der Pfeil von State 6 nach State 0, dass das Verfahren wiederholt durchgeführt werden kann. Das Verfahren kann auch als Endlosschleife ausgeführt werden.

Gemäß einer Ausführungsform weist die Software-Funktionalität einen Koordinator auf, der die Aufgabe hat, kupplungssteuerungsinterne Requests (Adaptionswunsch während Fahrt (durch Phantomstart), Schließwunsch, Adaptionswunsch während Fahrzeugstillstand) zu bündeln und zu priorisieren. Bei einer Entscheidung für einen Adaptionswunsch während der Fahrt und gültiger Randbedingungen wird ein Phantomstart bei einer übergeordneten Steuerungseinheit angefordert.

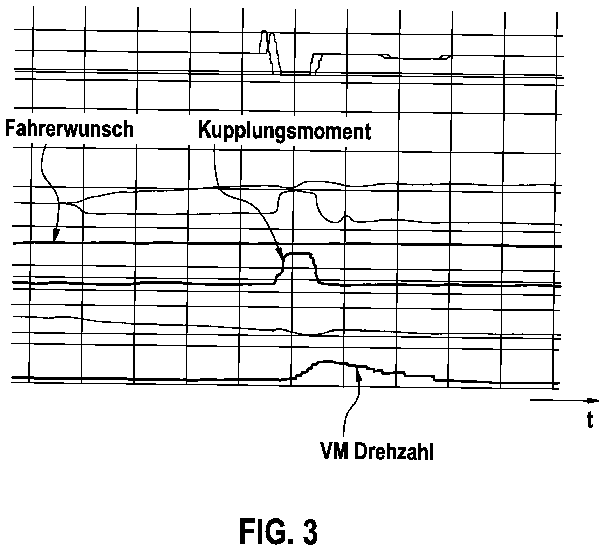

Figur 3 zeigt den zeitlichen Verlauf eines Phantomstarts, wobei sich der Verbrennungsmotor VM ab einem Zeitpunkt, bei welchem die Proportionalkupplung zumindest teilweise geschlossen wird und damit ein Kupplungsmoment anliegt, für ca. 500-750ms dreht. Es wird während des Phantomstarts nicht eingespritzt. Die gleichbleibende Linie in Figur 3, die den Fahrerwunsch repräsentiert, verdeutlicht, dass der Phantomstart ohne expliziten Fahrerwunsch ausgelöst wird.

Es wird angemerkt, dass das Drehzahlsignal während des Phantomstarts im Kombiinstrument ausgeblendet wird, damit der Fahrer das Andrehen des Verbrennungsmotors optisch nicht wahrnehmen kann. Akustisch ist das Andrehen auf ca. 500 U/min in der Regel nicht wahrnehmbar, da Rollgeräusche der Reifen, Umgebungsgeräusche oder das Radio die durch das Hochschleppen des Verbrennungsmotors entstehenden Geräusche deutlich überlagern. Applikativ kann über die Randbedingungen für Phantomstarts sichergestellt werden, dass nur in solchen Fahrsituationen adaptiert wird, in denen der Vorgang akustisch und bezüglich Komforts unbemerkt bleibt.

Obwohl die Erfindung in der vorangegangenen Beschreibung im Detail illustriert und beschrieben wurde, sollen solche Illustrationen und Beschreibungen lediglich als illustrativ oder exemplarisch angesehen werden und nicht als restriktiv. Die Erfindung ist nicht auf die offenbarte Ausführungsform beschränkt. Andere Variationen der offenbarten Ausführungsform können verstanden und bewirkt werden durch einen Fachmann beim Umsetzen der beanspruchten Erfindung, aus dem Studium der Zeichnungen, der Offenbarung und der anhängenden Ansprüche. In den Ansprüchen schließt das Wort "aufweisen" andere Elemente oder Schritt nicht aus und der unbestimmte Artikel "ein" schließt eine Mehrzahl nicht aus.

Die Bezugszeichen in den Ansprüchen sollen den Umfang derselben nicht beschränken.

## Patentansprüche

1. Verfahren zur Adaption des Kupplungsmomentes einer Proportionalkupplung (K0), die zwischen einem Verbrennungsmotor (VM) und einer elektrischen Maschine (EM) in einem Antriebsstrang eines Parallel-Hybridfahrzeugs angeordnet ist, wobei das Verfahren die folgenden Schritte aufweist:
Prüfen, ob die Proportionalkupplung (K0) offen ist, ob der Verbrennungsmotor (VM) aus ist und ob die elektrische Maschine (EM) aktiv ist,
Schließen der Proportionalkupplung (K0),
Andrehen des Verbrennungsmotors (VM), und
Adaptieren des Kupplungsmomentes der Proportionalkupplung (K0),
**dadurch gekennzeichnet, dass**
kein Einspritzen eines Brennstoffs in den Verbrennungsmotor (VM) vorgenommen wird, so dass der Verbrennungsmotor (VM) nicht gezündet wird.

2. Verfahren nach Anspruch 1, wobei das Adaptieren des Kupplungsmomentes der Proportionalkupplung (K0) ein Vergleichen einer erwarteten Drehzahländerung der elektrischen Maschine (EM) mit einer tatsächlich aufgetretenen Drehzahländerung aufweist.

3. Verfahren nach Anspruch 1, wobei ferner zumindest eine der Bedingungen aus der Gruppe, bestehend aus: Getriebezustand, Fahrzeuggeschwindigkeit, Momentenreserve der elektrischen Maschine, Fahrerwunsch, Zeit, Temperatur, Drehzahl, geprüft wird.

4. Verfahren nach Anspruch 1, wobei das Verfahren jederzeit abgebrochen werden kann.

5. Verfahren nach Anspruch 1, ferner aufweisend:
Ausblenden von optischen und/oder akustischen Signalen, die eine Überwachung von Fahrzuständen durch einen Fahrer ermöglichen.

6. Parallelhybrid-Antriebsstrang, aufweisend:
einen Verbrennungsmotor (VM),
eine Elektrischen Maschine (EM),
eine Proportionalkupplung (K0), welche zwischen dem Verbrennungsmotor (VM) und der Elektrischen Maschine (EM) angeordnet ist, und
eine Steuereinheit (ECU) zur Steuerung des Antriebsstranges,
**dadurch gekennzeichnet, dass**
die Steuereinheit eingerichtet ist, das Verfahren zur Adaption des Kupplungsmomentes der Proportionalkupplung (K0) gemäß einem der Ansprüche 1 bis 5 durchzuführen.

7. Computerprogramm, das alle Schritte eines Verfahrens nach einem der Ansprüche 1-5 ausführt, wenn es auf einer Steuereinheit (ECU) eines Parallelhybrid-Antriebsstranges nach Anspruch 6 ausgeführt wird.

8. Computerprogrammprodukt mit Programmcode, der auf einem maschinenlesbaren Träger gespeichert ist, zur Durchführung des Verfahrens nach einem der Ansprüche 1-5, wenn das Programm auf einer Steuereinheit (ECU) eines Parallelhybrid-Antriebsstranges nach Anspruch 6 ausgeführt wird.

## Claims

1. Method for adapting the clutch torque of a proportional clutch (K0) which is arranged between an internal combustion engine (VM) and an electric machine (EM) in a drive train of a parallel-hybrid vehicle, wherein the method has the following steps:
checking whether the proportional clutch (K0) is open, whether the internal combustion engine (VM) is off and whether the electric machine (EM) is active,
closing the proportional clutch (K0),
starting the internal combustion engine (VM), and
adapting the clutch torque of the proportional clutch (K0),
**characterized in that**
fuel is not injected into the internal combustion engine (VM), with the result that the internal combustion engine (VM) is not fired.

2. Method according to Claim 1, wherein the adaptation of the clutch torque of the proportional clutch (K0) comprises comparing an expected change in the rotational speed of the electric machine (EM) with an actually occurring change in the rotational speed.

3. Method according to Claim 1, also wherein at least one of the conditions from the group composed of: transmission state, vehicle speed, torque reserve of the electric machine, driver's request, time, temperature, rotational speed, is checked.

4. Method according to Claim 1, wherein the method can be aborted at any time.

5. Method according to Claim 1, also comprising:
gating out optical and/or acoustic signals which permit driving states to be monitored by a driver.

6. Parallel-hybrid drive train, having:
an internal combustion engine (VM),
an electric machine (EM),
a proportional clutch (K0) which is arranged between the internal combustion engine (VM) and the electric machine (EM), and
a control unit (ECU) for controlling the drive train,
**characterized in that**
the control unit is configured to carry out the method for adapting the clutch torque of the proportional clutch (K0) according to one of Claims 1 to 5.

7. Computer program which carries out all the steps of a method according to one of Claims 1-5 when it is run on a control unit (ECU) of a parallel-hybrid drive train according to Claim 6.

8. Computer program product with program code which is stored on a machine-readable carrier, for executing the method according to one of Claims 1-5 when the program is run on a control unit (ECU) of a parallel-hybrid drive train according to Claim 6.

## Revendications

1. Procédé, destiné à adapter le couple d'embrayage d'un embrayage proportionnel (K0), qui est placé entre un moteur à combustion interne (VM) et une machine électrique (EM) dans une chaîne cinématique d'un véhicule hybride parallèle, le procédé comportant les étapes suivantes, consistant à :
vérifier si l'embrayage proportionnel (K0) est ouvert, si le moteur à combustion interne (VM) est arrêté et si la machine électrique (EM) est active,
fermer l'embrayage proportionnel (K0),
démarrer le moteur à combustion interne (VM), et
adapter le couple d'embrayage de l'embrayage proportionnel (K0),
**caractérisé**
**en ce qu'**il n'est procédé à aucune injection d'un carburant dans le moteur à combustion interne (VM), de sorte que le moteur à combustion interne (VM) ne subisse aucun allumage.

2. Procédé selon la revendication 1, l'adaptation du couple d'embrayage de l'embrayage proportionnel (K0) comportant une comparaison d'une modification attendue du régime de la machine électrique (EM) avec une modification survenue du régime.

3. Procédé selon la revendication 1, par ailleurs au moins l'une des conditions du groupe comprenant l'état de la boîte de vitesses, la vitesse du véhicule, la réserve de couple de la machine électrique, un souhait du conducteur, l'heure, la température, le régime, étant vérifiée.

4. Procédé selon la revendication 1, le procédé étant susceptible d'être interrompu à tout moment.

5. Procédé selon la revendication 1, comportant par ailleurs :
un masquage de signaux optiques et/ou acoustiques qui permettent une supervision d'états de conduite par un conducteur.

6. Chaîne cinématique parallèle hybride, comportant :
un moteur à combustion interne (VM),
une machine électrique (EM),
un embrayage proportionnel (K0), lequel est placé entre le moteur à combustion interne (VM) et la machine électrique (EM) et une unité de commande (ECU), destinée à commander la chaîne cinématique,
**caractérisée en ce que**
l'unité de commande est aménagée pour réaliser le procédé destiné à adapter le couple d'embrayage d'un embrayage proportionnel (K0) selon l'une quelconque des revendications 1 à 5.

7. Programme informatique, qui exécute toutes les étapes d'un procédé selon l'une quelconque des revendications 1 à 5 lorsqu'il est exécuté sur une unité de commande (ECU) d'une chaîne cinématique parallèle hybride selon la revendication 6.

8. Produit de programme informatique pourvu d'un code programme qui est mémorisé sur un support lisible par machine, pour réaliser le procédé selon l'une quelconque des revendications 1 à 5, lorsque le programme est exécuté sur une unité de commande (ECU) d'une chaîne cinématique parallèle hybride selon la revendication 6.
